Europäisches Patentamt

European Patent Office

Office européen des brevets

(19)

(11) Publication number: **0 078 855**

**A1**

(12) **EUROPEAN PATENT APPLICATION**

published in accordance with Art. 158(3) EPC

(21) Application number: 82901440.6

(22) Date of filing: 18.05.82

Data of the international application taken as a basis:

(86) International application number:
PCT/JP82/00177

(87) International publication number:
WO82/04141 (25.11.82 82/28)

(51) Int. Cl.³: **G 05 D 3/12**

(30) Priority: 18.05.81 JP 74678/81

(43) Date of publication of application:
18.05.83 Bulletin 83/20

(84) Designated Contracting States:
DE FR GB

(71) Applicant: Fanuc Ltd
5-1, Asahigaoka, 3-chome
Hino-shi, Tokyo 191(JP)

(72) Inventor: FUKUYAMA, Hiroomi
719-644, Yano-cho Hachioji-shi
Tokyo 192(JP)

(72) Inventor: ISOBE, Shinichi
Hinodai-Haitsu 516, 1-1-1 Hinodai, Hino-shi
Tokyo 191(JP)

(72) Inventor: SHIMA, Atsushi
2-39-13-1002, Kamiogi Suginami-ku
Tokyo 167(JP)

(74) Representative: Billington, Lawrence Emlyn et al,
HASELTINE LAKE & CO Hazlitt House 28 Southampton
Buildings Chancery Lane
London WC2A 1AT(GB)

(54) NUMERICAL CONTROL DEVICE.

(57) In a numerical control device having a spindle speed direct instruction means (11a) for instructing a spindle speed directly and a position detecting means (20) for detecting the present rotational position of a spindle (17), means (11b) for generating the deviation between the instructed rotational position and the present rotational position and switching means (11a) are provided. When controlling the speed of the spindle, a speed command issued from the spindle speed direct instruction means (11a) is input through the switching means to a spindle speed controlling circuit (12), and by controlling the position of the spindle, the positional deviation is input through the switching means to the speed controlling means, thereby stopping the spindle at the instructed rotational position.

Fig.2

## DESCRIPTION

## NUMERICAL CONTROL DEVICE

### Technical Field

This invention relates to a numerical control device and, more particularly, to a simply constructed numerical control device which has a spindle indexing function and which is capable of controlling both the speed and angular position of a spindle.

### Background Art

Numerically controlled machine tools are adapted to subject a workpiece to machining such as turning, thread cutting and tapping while a spindle is being rotated at a predetermined speed. In general, the rotational speed of the spindle is commanded indirectly by a numerical control device (referred to as an NC) with a command in the form an S-function instruction $S_{\Delta \Delta}$, whereby the machine tool is made to rotate the spindle at a speed in accordance with a two-digit numerical value that follows the letter of the alphabet S. Recently, a method of commanding the rotational speed of a spindle directly has been proposed wherein the rotational speed of the spindle is commanded directly by means of a four-digit numerical value following the letter S, the numerical value being subjected to a DA conversion for application to a speed control circuit. An advantage gained with the direct command method is fine control of speed.

A frequent requirement recently in numerically controlled machine tools is that the spindle be stoppable at any angular position with great accuracy. When milling, drilling or tapping a workpiece at a predetermined angular position thereon by means of a lathe or turning center, for example, it is necessary to bring the spindle to rest at the predetermined angular position.

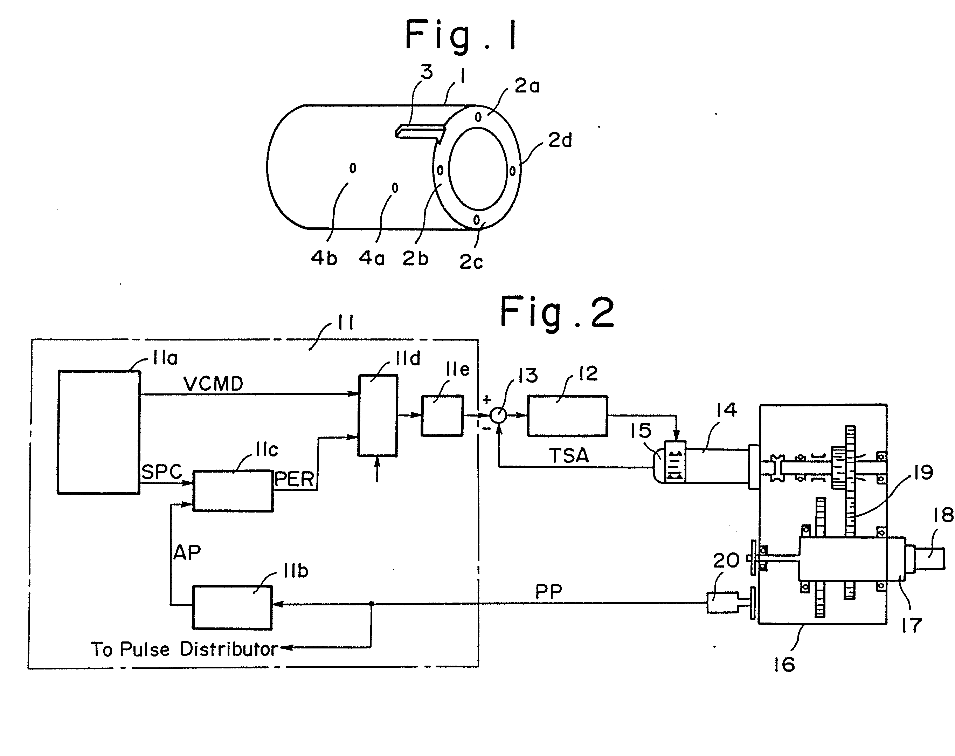

Fig. 1 is a view showing screw holes 2a, 2b, 2c, 2d, a keyway 3 and holes 4a, 4b formed in a turned workpiece 1 at predetermined angular positions. These screw holes, keyway and other holes may be machined in the following manner, which serves as an example only. First, the workpiece 1, held in a chuck which is not shown, is driven by a spindle drive motor and brought to a predetermined angular position, whereby the position on the body of the workpiece at which the workpiece is to be machined is faced toward a rotary tool, after which the tool is driven into rotation to machine, say, a screw hole. Thus, in a numerically controlled machine tool, it is required that the spindle be stopped, with great accuracy, at any angular position in line with the particular goal.

In the prior art, the foregoing is achieved by providing separate systems for controlling spindle speed and position, whereby spindle speed and position are controlled independently. Alternatively, an already existing spindle speed control system is supplemented with a structurally complex control unit, provided externally of the NC, for stopping the spindle at a predetermined position.

Accordingly, the conventional methods are attended by such disadvantages as a need for considerable hardware, as well as complex and costly circuitry and a complicated control operation.

The object of the present invention, therefore, is to provide a numerical control device which, through a very simple method and very little additional hardware or only slight alteration of NC software, enables both the speed and position of a spindle to be controlled.

Disclosure of the Invention

According to the present invention, in an NC equipped with spindle speed direct command means for commanding the rotational speed of a spindle directly, and sensing means for sensing the actual angular position of the spindle, the NC, which controls the speed of the spindle by the direct command, is merely provided with a register for storing the actual angular position of the spindle, an arithmetic circuit for computing a positional offset, and a switching circuit, so that a loop can be formed for controlling both the rotational speed and the angular position of the spindle.

Brief Description of the Drawings

Fig. 1 is an explanatory view for explaining the necessity of controlling the position of a spindle, and Fig. 2 is a circuit block diagram of the present invention.

Best Mode for Carrying Out the Invention

Fig. 2 is a circuit block diagram illustrating an embodiment of the present invention. In Fig. 2, numeral 11 denotes an NC which includes a command unit 11a for producing a speed command VCMD issued directly on the basis of a digital value of four digits which follow the letter S, as well as a spindle position · command SPC, a register PER for storing the actual angular position of a spindle by counting up or counting down, in accordance with the direction of rotation, position pulses PP each of which is generated whenever a pulse coder, described below, rotates by a predetermined amount, an arithmetic circuit 11c for producing, in digital form, a positional offset PER between a commanded angular position for the spindle and the actual angular position of the spindle, a switching circuit 11d for switching between and delivering, in accordance with a speed control mode or position control mode, either the speed command VCMD or the positional offset PER (a digital value) produced by the command unit 11a, respectively, and a DA converter 11e.

Numeral 12 denotes a speed command circuit which incorporates a phase compensating circuit, a voltage/phase converter, and a thyristor circuit, these not being illustrated in the drawings. Numeral 13 denotes an adding-subtracting circuit which, in speed control, produces a differential voltage (speed deviation) between the speed command VCMD and an actual speed voltage TSA and, in position control, produces a differential voltage between the positional offset PER and the actual speed voltage TSA. Numeral 14 designates a DC motor, and 15 a tachogenerator for generating the actual speed voltage in accordance with the rotational speed of the DC motor 14. Numeral 16 denotes a gear box, 17 a spindle, 18 a workpiece, 19 gears, and 20 a pulse coder such as a position coder for generating a position pulse PP each time the spindle rotates by a predetermined amount, as well as a one-revolution signal (not shown) each time the spindle makes one full revolution.

In the speed control mode, the switching circuit 11d delivers the speed command VCMD to the DA converter 11e. The latter converts the speed command VCMD into an analog value and applies it to the arithmetic circuit 13 which, upon computing the difference between the speed command VCMD and the actual speed voltage TSA, delivers the difference to the speed control circuit 12. The speed control circuit 12 executes speed control in such fashion that the speed deviation approaches zero, thereby rotating the spindle 17 at the commanded speed. As the spindle rotates, the pulse coder 20 produces the position pulses PP and the one-revolution pulses. These enter a pulse distributor of a feed motor and, in a thread cutting machining operation or the like, are employed in rotating the
feed motor in synchronism with the spindle.  It should
be noted that the command unit 11a, DA converter 11e,
speed control circuit 12, adding-subtracting circuit
13, DC motor 14, tachogenerator 15 and pulse coder 20
are components already possessed by the prior art to
control the speed of a spindle by direct command.

In the position control mode, on the other hand,
the command unit 11a issues the spindle position
command SPC.  The register 11b, it should be noted, is
constantly registering the actual position AP of the
spindle by reversibly counting, in accordance with the
direction of spindle rotation, the position pulses PP
generated by the pulse coder 20.  The arithmetic
circuit 11c computes the positional offset PER between
the spindle position command SPC and the actual angular
position AP and delivers the positional offset PER to
the DA converter 11e through the switching circuit 11d.
The DA converter 11e converts the positional deviation
PER into an analog value which it delivers to the
adding-subtracting circuit 13.  The latter computes the
difference between the positional offset and the actual
speed voltage TSA and applies it to the speed control
circuit 12, which controls the rotation of the spindle
17 in such a fashion that the difference approaches
zero, with the spindle being brought to a stop at the
commanded position.

In accordance with the present invention, a position control loop can be formed merely by providing an NC, adapted to control the speed of a spindle by a direct command composed of an S instruction and four digits, with the register 11b for storing the actual angular position, the arithmetic circuit 11c for computing the positional offset, and the switching circuit 11d, making it possible to control both the speed and position of the spindle through a simple . arrangement.  In other words, both speed and position control are made possible through the addition of very little hardware.  Furthermore, if the NC has the construction of a computer, including a processor, a control program memory and a data memory, then the arithmetic circuit, switching circuit and register need not be specially provided.  Instead, control of both the spindle speed and position can be achieved merely by a slight modification of the control program.  In view of the fact that the position control system for a table, tool or the like, driven by a feed motor, is entirely the same as the above-described position control system for a spindle, the creation of very little software will enable control of both speed and position.

Industrial Applicability

The present invention provides a numerical control device which, through a very simple method and very little additional hardware or only slight alteration of NC software, enables both the speed and position of a spindle to be controlled.  The invention therefore has a high degree of industrial applicability as it permits numerical control to be executed quickly and accurately.

CLAIMS

A numerical control device having spindle speed direct command means for directly commanding the speed of a spindle, and position sensing means for sensing the actual angular position of the spindle, characterized by the provision of means for generating a positional offset between a commanded angular position and the actual angular position, and switching means, wherein, in a spindle speed control mode, a speed command issued by said spindle speed direct command means is applied to a spindle speed control circuit through the switching means and, in a spindle position control mode, said positional offset is applied to said speed control circuit through the switching means, said spindle being brought to a stop at the commanded angular position.

# Fig. I

# Fig. 2

0078855

**0078855**

# INTERNATIONAL SEARCH REPORT

International Application No. PCT/JP82/00177

## I. CLASSIFICATION OF SUBJECT MATTER (if several classification symbols apply, indicate all) ³

According to International Patent Classification (IPC) or to both National Classification and IPC

Int. Cl.³ G05D 3/12

## II. FIELDS SEARCHED

| Minimum Documentation Searched ⁴ | |
|---|---|
| Classification System | Classification Symbols |
| I P C | G05D 3/00, G05B 19/00 |

| Documentation Searched other than Minimum Documentation to the Extent that such Documents are Included in the Fields Searched ⁵ | |
|---|---|
| Jitsuyo Shinan Koho | 1965 - 1982 |
| Kokai Jitsuyo Shinan Koho | 1971 - 1982 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| X | JP,A, 54-67967 (Komatsu Ltd.) 31. May. 1979 (31.5.79) | 1 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| August 9, 1982 (09.08.82) | August 16, 1982 (16.08.82) |

| International Searching Authority ¹ | Signature of Authorized Officer ²⁰ |
|---|---|
| Japanese Patent Office | |

Form PCT/ISA/210 (second sheet) (October 1981)